# EUROPÄISCHE PATENTANMELDUNG

(11) **EP 2 902 712 A1**
(43) Veröffentlichungstag der Anmeldung: **05.08.2015**
(21) Anmeldenummer: 15000050.3
(22) Anmeldetag: 12.01.2015
(51) Int. Cl.: F24D 3/14, F24D 11/00

(54) **Thermisch aktivierte Bodenplattenanordnung**

(30) Priorität: 03.02.2014 DE 202014000931 U
(71) Anmelder: Karl Bachl Kunststoffverarbeitung GmbH & Co. KG, 86899 Landsberg a. Lech (DE)
(72) Erfinder: Schiffke, Peter, 86836 Obermeitingen (DE)
(74) Vertreter: Leinweber & Zimmermann

(57) **Zusammenfassung**

Die Erfindung betrifft eine thermisch aktivierte Bodenplattenanordnung mit einer Wärmespeicherschicht, in der ein Leitungsnetz für ein Wärmeträgermedium zum Einbringen von Wärmeenergie in die Wärmespeicherschicht und/oder zum Herausführen von Wärmeenergie aus der Wärmespeicherschicht verläuft, und mit einer ersten Seite der Wärmespeicherschicht angeordneten ersten Dämmungsschicht, wobei sich eine auf der anderen Seite der Wärmespeicherschicht angeordnete zweite Dämmungsschicht befindet.

## Beschreibung

Die Erfindung betrifft eine thermisch aktivierte Bodenplattenanordnung mit einer Wärmespeicherschicht, in der ein Leitungsnetz für ein Wärmeträgermedium zum Einbringen von Wärmeenergie in die Wärmespeicherschicht und/oder zum Herausführen von Wärmeenergie aus der Wärmespeicherschicht verläuft, und mit einer auf einer ersten Seite der Wärmespeicherschicht angeordneten ersten Dämmungsschicht.

Bei der thermischen Bauteilaktivierung werden Gebäudemassen zur Regulierung der Temperatur von Gebäuden genutzt. Ein Beispiel für ein bekanntes thermisch aktiviertes Bauteil ist eine thermoaktive Decke mit einer Schicht aus massivem Material wie etwa Beton, in der ein Rohrleitungsregister für ein Wärmeträgermedium verläuft. Die Schicht aus massivem Material kann je nach der Temperatur des durch das Rohrleitungsregister ▪ fließenden Wärmeträgermediums gekühlt oder erwärmt werden, und sie gibt diese Wärme oder Kälte zeitversetzt an den darunterliegenden Raum ab, um diesen zu heizen oder abzukühlen.

Aufgrund der großen Abstrahlfläche einer thermoaktiven Decke muss das Wärmeträgermedium weniger stark erwärmt werden als im Fall einer herkömmlichen Heizung mit einem Heizkörper, der nur eine relativ kleine Abstrahlfläche aufweist, so dass insgesamt Energie eingespart werden kann. Aufgrund eines Zeitversatzes zwischen Erwärmung und Abstrahlung durch die thermoaktive Schicht kann Heizenergie dann zur Erwärmung der thermoaktiven Schicht eingesetzt werden, wenn sie kostengünstig zur Verfügung steht, während das Rauminnere auch später noch erwärmt wird, wenn die Energiekosten ggf. bereits wieder gestiegen sind.

Auch thermoaktive Böden sind bekannt. Verschiedene Anordnungen thermoaktiver Böden und Herstellungsverfahren sind in der Druckschrift DE 203 04 644 U1 beschrieben.

Problematisch ist dabei, dass an die thermisch aktivierten Decken und Böden angrenzende Räume zwar zufriedenstellend beheizt oder gekühlt werden können, aber die Temperatur in entfernt davon liegenden Räumlichkeiten kaum beeinflussbar ist. Ferner haben bekannte thermoaktive Bauteile den Nachteil, dass sie nur in begrenztem Umfang Wärmeenergie aufnehmen können, da sonst der daran angrenzende Raum überheizt wird.

In Anbetracht dieser Probleme ist es die Aufgabe der vorliegenden Erfindung, eine thermisch aktivierte Bodenplattenanordnung bereitzustellen, die besonders flexibel einsetzbar und insbesondere zur gleichmäßigen Beheizung eines ganzen Gebäudes verwendbar ist.

Diese Aufgabe wird erfindungsgemäß durch eine Weiterbildung einer bekannten Bodenplattenanordnung gelöst, die im Wesentlichen dadurch gekennzeichnet ist, dass auf der anderen Seite der Wärmespeicherschicht eine zweite Dämmungsschicht angeordnet ist.

Mit anderen Worten ist die Wärmespeicherschicht auf beiden Seiten von einer Dämmungsschicht umgeben, so dass sie kaum Wärme an einen angrenzenden Raum oder in die Umgebung abstrahlt. Vielmehr bleibt die der Wärmespeicherschicht zugeführte Wärmeenergie so lange darin gespeichert, bis sie mit dem Wärmeträgermedium als Überträger wieder aus der Wärmespeicherschicht abgeführt und einem Wärmeverbraucher zugeführt wird. Während bei den bekannten thermisch aktivierten Bauteilaktivierungen also lediglich eine verzögerte Abgabe der Wärmeenergie an die zu beheizenden Räume möglich ist, wird erfindungsgemäß ein in einen Gebäudeboden integrierter Wärmespeicher zur Verfügung gestellt, aus dem die Wärmeenergie bedarfsgerecht auch später entnommen werden und insbesondere einem örtlich entfernten Raum zugeführt werden kann.

Die Erfindung geht auf die Erkenntnis zurück, dass Energie oftmals nicht bedarfsorientiert zur Verfügung gestellt werden kann, insbesondere wenn sie durch Sonnen- oder Windkraft erzeugt wurde. Aus diesem Grund ist es sinnvoll, die temporär nicht genutzte oder nutzbare Energie in Form von thermischer Energie in einer Wärmespeicherschicht zu speichern und dann zur Verfügung zu stellen, wenn sie benötigt wird. Als Wärmespeicher ist eine Wärmespeicherschicht besonders geeignet, die ein Material mit einer hohen spezifischen Wärmekapazität bei gleichzeitig hoher Dichte aufweist, wie sie in Gebäudeböden und insbesondere in Gebäudefundamenten regelmäßig vorhanden ist.

Erfindungsgemäß ist eine Erwärmung der Wärmespeicherschicht auf eine Maximaltemperatur von bis zu 35°C, insbesondere von bis zu 40°C vorgesehen. Die Maximaltemperatur der Wärmespeicherschicht ist dadurch begrenzt, dass bei noch höheren Temperaturen Spannungen und hohe thermische Längenänderungen in der Wärmespeicherschicht auftreten können. Eine Abkühlung der Wärmespeicherschicht durch Wärmeentzug ist auf bis zu 25°C oder weniger, insbesondere auf etwa 15°C vorgesehen. Damit steht eine Puffertemperatur von maximal etwa 25 Kelvin zur Verfügung.

In einer ersten möglichen Ausführungsform der Erfindung weist die Wärmespeicherschicht ein Leitungsnetz auf, das von einem Wärmeträgermedium durchfließbar ist. Wenn überschüssige Energie zur Verfügung steht, wird das Wärmeträgermedium erwärmt und dem Leitungsnetz zugeführt, das bspw. windungsförmig in der Wärmespeicherschicht verläuft, so dass die Wärmespeicherschicht aufgeheizt wird. Wenn später Heizenergie bspw. in einem entfernen Raum des Gebäudes erforderlich ist, ist gespeicherte Wärmeenergie mittels des Wärmeträgermediums aus der aufgeheizten Wärmespeicherschicht entnehmbar und dem zu beheizenden Raum zu Heizzwecken zuführbar. Mit anderen Worten kann das Leitungsnetz, das von einem Wärmeträgermedium wie etwa Wasser durchfließbar ist, zunächst zur Zuführung und später zur Entnahme von Wärme aus der als Wärmespeicher dienenden Wärmespeicherschicht verwendet werden.

In einer alternativen Ausführungsform weist das Leitungsnetz mindestens eine Wärmezuführleitung zum Einbringen von Wärmeenergie in die Wärmespeicherschicht und mindestens eine beabstandet davon verlaufende Wärmeabführleitung zum Abführen von in der Wärmespeicherschicht gespeicherter Wärmeenergie an einen Wärmeverbraucher wie etwa eine Raumheizung auf. Die Wärmezuführleitungen und die Wärmeabführleitungen können in voneinander vertikal beabstandeten Ebenen in der Wärmespeicherschicht verlaufen. Auf diese Weise sind eine Beheizung der Wärmespeicherschicht mittels eines (ersten) Wärmeträgermediums in der Wärmezuführleitung und eine Wärmeentnahme aus der Wärmespeicherschicht mittels eines (zweiten) Wärmespeichermediums in der Wärmeabführleitung unabhängig voneinander möglich.

Die Wärmezuführleitung kann für ein flüssiges Wärmeträgermedium wie etwa Wasser und die Wärmeabführleitung kann für ein flüssiges oder gasförmiges Wärmeträgermedium wie etwa Luft eingerichtet sein. Falls Luft als Wärmeabführmedium verwendet wird, kann diese direkt einem Wärmeverbraucher wie etwa einem Luftheizsystem, bspw. einer Lüftungsanlage, zugeführt werden.

Zweckmäßigerweise weist die zweite Dämmungsschicht, die die Wärmespeicherschicht gegenüber dem Rauminneren thermisch isoliert, ein Material mit geringer Wärmeleitfähigkeit wie etwa Mineralwolle (MW), vorzugsweise expandiertes Polystyrol (XPS), Polyurethan (PUR) und/oder einen anderen für Anwendung unter Estrichen geeigneten Dämmstoff auf. Dadurch wird verhindert, dass in der Wärmespeicherschicht gespeicherte Wärmeenergie durch die zweite Dämmungsschicht in das Rauminnere entweicht. Die zweite Dämmungsschicht kann druckbelastbar (DEO) und/oder als Trittschalldämmung ausgeführt sein. Die Dicke der zweiten Dämmungsschicht wird objektspezifisch ermittelt und festgelegt.

Oberhalb der zweiten Dämmungsschicht kann eine Estrichschicht angeordnet sein, die den Grund für einen darauf anzuordnenden Fußbodenbelag bilden kann. Der Estrich entspricht vorzugsweise der Norm DIN 18560, wobei die Dicke und die Ausführung der Estrichschicht gemäß der Nutzung der Räume und den darin zu erwartenden Nutzlasten festgelegt werden.

Andererseits ist die erste Dämmungsschicht vorzugsweise einem Bauuntergrund zugewandt, auf dem ein Gebäude errichtet wird. Die erste Dämmungsschicht kann in diesem Fall besonders stark isolierend eingerichtet sein, um ein Entweichen von thermischer Energie in das Erdreich unterhalb des Gebäudes zu verhindern. Zu diesem Zweck kann sie je nach Bedarf einlagig oder mehrlagig ausgeführt sein. Die Dicke der einzelnen Lagen der ersten Dämmungsschicht ist für den jeweiligen Verwendungsfall zu bestimmen und festzulegen. Sie hängt bspw. von der Gründungstiefe des Gebäudes und der Temperatur des Erdreichs sowie von zu erwartenden Außentemperaturschwankungen ab.

Vorzugseise sind die erste Dämmungsschicht und/oder die Wärmespeicherschicht eine tragende Fundamentschicht für das Gebäude. Mit anderen Worten ist die erfindungsgemäße Bodenplattenanordnung in ein Fundament eines Gebäudes integriert. Da das Fundament bzw. die Gründungsplatte eines Gebäudes regelmäßig besonders volumenreich und massiv ist, eignet es sich besonders gut als Wärmespeicher.

Ebenso wie die zweite Dämmungsschicht weist vorzugsweise auch die erste Dämmungsschicht ein Material mit geringer Wärmeleitfähigkeit wie etwa Glasschotter, Schaumglas und/oder vorzugsweise extrudiertes Polystyrol (XPS) auf.

In einer besonders bevorzugten Ausführungsform der Erfindung hat die zweite Dämmungsschicht einen Wärmedurchgangskoeffizient von 0,3 W/m²K oder weniger, bevorzugt 0,2 W/m²K oder weniger, insbesondere etwa 0,12 W/m²K oder weniger. Die Wärmeverluste zum Erdreich sind in diesem Fall ausreichend begrenzt. Auch die erste Dämmungsschicht kann einen Wärmedurchgangskoeffizienten in der genannten Größenordnung aufweisen.

Es hat sich im Hinblick auf eine gute Wärmespeicherfähigkeit der Wärmespeicherschicht als zweckmäßig erwiesen, dass diese Schicht aus einem Material mit einer hohen spezifischen Wärmekapazität besteht. Insbesondere weist die Wärmespeicherschicht ein Material mit einer spezifischen Wärmekapazität von 0,5 kJ/(kg·K) oder mehr, insbesondere 0,85 kJ/(kg·K) oder mehr, und bevorzugt mit einer spezifischen Wärmekapazität von 1,5kJ/(kg·K) oder weniger, insbesondere 1,0kJ/(kg·K) oder weniger auf.

Ein Material mit einer hohen spezifischen Wärmekapazität zwischen etwa 0,85 kJ/(kg·K) und 1,0 kJ/(kg·K), das gleichzeitig als tragende Gründungsplattenschicht besonders geeignet ist, ist Stahlbeton. Die Wärmespeicherschicht kann aus diesem Grund überwiegend aus Beton, insbesondere aus Stahlbeton bestehen, der zum Erhöhen der Zugfestigkeit und der Stabilität zusätzlich entsprechend den statischen Erfordernissen bewehrt sein kann.

Eine Dicke der Wärmespeicherschicht zwischen 200 mm und 1000 mm, insbesondere von 300 mm oder mehr und 500 mm oder weniger, hat sich im Hinblick auf den Einsatz als Wärmespeicher und gleichzeitig als tragende Schicht des Gebäudefundaments als besonders geeignet erwiesen. Dabei kann die Wärmespeicherschicht pro Quadratmeter zur Speicherung einer entnehmbaren Wärmeenergie von mehr als 5 kWh, insbesondere von mehr als 7 kWh eingerichtet sein.

Zum Betreiben einer Gebäudeheizung wie etwa einer Fußbodenheizung kann die in der Wärmespeicherschicht gespeicherte Wärmeenergie mittels des Wärmeträgermediums entnommen werden und direkt der Gebäudeheizung zugeführt werden. Diese unmittelbare Wärmeentnahme zum Betrieb einer Gebäudeheizung ist in einem Temperaturbereich der Wärmespeicherschicht zwischen etwa 40°C und etwa 30°C sinnvoll.

Das Wärmeträgermedium kann unter weiterer Abkühlung der Wärmespeicherschicht auf ein höheres Temperaturniveau gebracht werden. Zu diesem Zweck kann eine Wärmepumpe zum Übertragen von in der Wärmespeicherschicht gespeicherter Wärmeenergie auf das Wärmeträgermedium vorgesehen sein. Dann ist eine Entladung der Wärmespeicherschicht bis auf etwa 15°C möglich. Eine weitere Abkühlung der Wärmespeicherschicht ist aufgrund von Spannungen und thermischen Längenänderungen in der Wärmespeicherschicht nicht vorgesehen.

Eines oder mehrere der folgenden Systeme kann zum Erwärmen des Wärmeträgermediums, das die Wärmeenergie in die Wärmespeicherschicht einbringt, vorgesehen sein: ein Blockheizkraftwerk (BHKW), ein Kraft-Wärme-Kopplungsaufbau (KWK), ein Solarthermie-System, ein Beheizungssystem mittels Strom aus dem Versorgungsnetz oder mittels Strom aus einer Photovoltaikanlage, eine mittels Strom aus dem Versorgungsnetz oder mittels Strom aus einer Photovoltaikanlage betriebene Wärmepumpe, ein Holzheizsystem und/oder ein Kamin oder Kaminofen. Die Wärmespeicherschicht wird insbesondere dann aufgeladen (erwärmt), wenn gerade überschüssige, nicht benötigte und/oder besonders günstige Energie zur Verfügung steht. Bspw. kann Strom aus dem Versorgungsnetz oder aus einer Photovoltaikanlage zu bestimmten Zeiten besonders günstig zur Verfügung stehen und zur Erwärmung des Wärmeträgermediums verwendet werden.

Die erfindungsgemäße thermisch aktivierte Bodenplattenanordnung kann in einem Fundament für ein Gebäude verwendet werden, das entsprechend der Energieeinspar-Verordnung planmäßig beheizt wird.

In der folgenden Beschreibung wird die Erfindung unter Bezugnahme auf die Zeichnung beispielhaft erläutert. In der Zeichnung zeigt

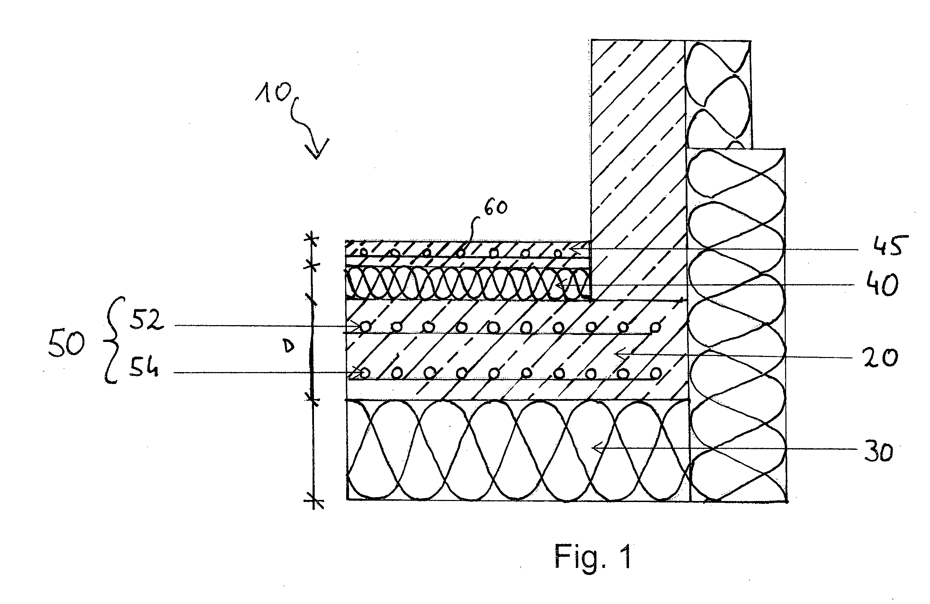

Fig. 1 eine schematische Schnittansicht durch eine thermisch aktivierte Bodenplattenanordnung gemäß der vorliegenden Erfindung.

Die in Fig. 1 dargestellte, thermisch aktivierte Bodenplattenanordnung 10 weist vier übereinander angeordnete Schichten auf. Die unterste Schicht ist eine lastabtragende erste Dämmungsschicht 30 eines Gebäudefundaments, die oberhalb des Baugrunds des Gebäudes angeordnet ist und die Bodenplattenanordnung nach unten hin thermisch isoliert. Darüber ist die Wärmespeicherschicht 20 angeordnet, innerhalb der ein Leitungsnetz 50 mit zwei Rohrregistern 52, 54 verläuft. Die Wärmespeicherschicht ist eine tragende Fundamentschicht des Gebäudes und bildet dessen Gründungsplatte. Oberhalb der Wärmespeicherschicht 20 ist eine zweite Dämmungsschicht 40 angeordnet, die die Bodenplattenanordnung zum Gebäudeinneren hin thermisch isoliert. Oberhalb der zweiten Dämmungsschicht 40 befindet sich eine Estrichschicht 45.

Das Leitungsnetz 50 ist derart in die Wärmespeicherschicht 20 eingebettet, dass die thermische Energie eines in dem Leitungsnetz fließenden Wärmeträgermediums unter geringem Wärmewiderstand auf das Material der Wärmespeicherschicht übertragbar ist und umgekehrt. Bspw. verläuft das Leitungsnetz in zahlreichen Rohrwindungen und/oder in parallel zueinander verlaufenden Rohrabschnitten durch die Wärmespeicherschicht 20.

Das Leitungsnetz 50 weist ein erstes Rohrregister mit Wärmezuführleitungen 54 auf, das in Schwererichtung unterhalb eines zweiten Rohrregisters mit Wärmeabführleitungen 52 durch die Wärmespeicherschicht 20 verläuft, wobei eine andere Anordnung ebenso möglich ist. Die Wärmezuführleitungen 54 dienen zum Einbringen von Wärmeenergie in die Wärmespeicherschicht, und die Wärmeabführleitungen 52 dienen zum Abführen von in der Wärmespeicherschicht gespeicherter Wärmeenergie zu einem Wärmeverbraucher. In den Wärmezuführleitungen 54 kann ein erstes Wärmeträgermediums wie etwa Wasser zirkulieren, das extern erwärmt wird, wenn gerade überschüssige Energie zu Verfügung steht. Für die externe Erwärmung können die Wärmezuführleitungen an ein Blockheizkraftwerk, ein Solarthermie-System oder ein anderes Heizsystem angeschlossen sein. In den Wärmeabführleitungen 52 kann ein zweites Wärmeträgermedium wie etwa Wasser oder Luft zirkulieren, um in dem Wärmespeichermedium 20 gespeicherte thermische Energie bspw. einer Raumheizung zuzuführen.

Die die Wärmespeicherschicht 20 zum Grund hin isolierende erste Dämmungsschicht 30 hat einen Wärmedurchgangskoeffizienten U von 0,12 W/m²K oder weniger, um Wärmeabflüsse zum Erdreich zu begrenzen. Dazu besteht sie aus einem Material mit geringer Wärmeleitfähigkeit wie etwa extrudiertem Polystyrol mit einer Dicke von vorzugsweise 300 mm.

Die Wärmespeicherschicht 20 besteht aus bewehrtem Stahlbeton, der in vertikaler Richtung eine Dicke D von etwa einem halben Meter hat. In Abhängigkeit von den statischen Anforderungen kann die Dicke D auch größer oder kleiner sein. Im Falle einer Fläche der Wärmespeicherschicht 20 von etwa 100 m² ergibt sich ein Betonvolumen von etwa 50 m³. Um Spannungen im Stahlbeton zu vermeiden, wird die Wärmespeicherschicht auf eine maximale Temperatur von etwa 40°C erwärmt und auf eine minimale Temperatur von etwa 15°C abgekühlt, so dass eine Puffertemperatur von 25 K zu zur Verfügung steht, innerhalb der der Wärmespeicher betreibbar ist.

Beton hat eine spezifische Wärmekapazität c zwischen 0,85 kJ/(kg·K) und 1,0 kJ/(kg·K), so dass die in der Wärmespeicherschicht speicherbare thermische Energie, die für Heizzwecke entnehmbar ist, in diesem Fall zwischen 709 kWh und 834 kWh liegt.

Ein modernes Einfamilienhaus benötigt an einem kalten Wintertag eine durchschnittliche Heizleistung von 10 kWh. Wenn die Wärmespeicherschicht 20 also voll aufgeladen ist (auf 40°C) und bis auf eine Temperatur von 15°C entladen wird, kann das Haus 70 bis 83 Stunden, also etwa 3 Tage lang beheizt werden. Eine Entladung der Wärmespeicherschicht bis auf 15°C ist bspw. mithilfe einer Wärmepumpe möglich, die das Wärmeträgermedium auf ein höheres Temperaturniveau bringt.

Zum Betreiben einer Raumheizung kann das durch die Wärmespeicherschicht 20 erwärmte Wärmeträgermedium auch direkt einer Heizungsanlage wie etwa einer Fußbodenheizung 60 zugeführt werden und dabei die Wärmespeicherschicht 20 bis auf 30°C entladen. In diesem Fall beträgt die Puffertemperatur 10°C und die der Wärmespeicherschicht entnehmbare Heizenergie 284 bis 334 kWh. Damit kann das Haus 28 bis 33 Stunden aus dem Wärmespeicher beheizt werden, wenn zwischenzeitlich keine Nachladung erfolgt.

Alternativ kann die thermische Energie mittels eines gasförmigen Wärmeträgermediums wie etwa Luft aus der Wärmespeicherschicht entnommen werden und direkt einer Lüftungsanlage zugeführt werden, bspw. bei Passivhäusern. Da die Temperatur der Luft oberhalb der Raumtemperatur liegen muss, ist eine Entladung der Wärmespeicherschicht 20 in diesem Fall auf bis zu etwa 25°C möglich. Hier beträgt die der Wärmespeicherschicht entnehmbare Heizenergie 425 bis 500 kWh, so dass das Haus 42 bis 50 Stunden lang aus dem Speicher beheizt werden kann.

Es sind auch Kombinationen aus den beschriebenen Verwendungsmöglichkeiten der erfindungsgemäßen Bodenplattenanordnung möglich. Die mögliche Entladung des Wärmespeichers hängt immer auch von dem Wärmeträgermedium und dem Heizsystem ab.

## Patentansprüche

1. Thermisch aktivierte Bodenplattenanordnung (10) mit einer Wärmespeicherschicht (20), in der ein Leitungsnetz (50) für ein Wärmeträgermedium zum Einbringen von Wärmeenergie in die Wärmespeicherschicht und/oder zum Herausführen von Wärmeenergie aus der Wärmespeicherschicht (20) verläuft, und mit einer auf einer ersten Seite der Wärmespeicherschicht (20) angeordneten ersten Dämmungsschicht (30), **gekennzeichnet durch** eine auf der anderen Seite der Wärmespeicherschicht (20) angeordnete zweite Dämmungsschicht (40).

2. Bodenplattenanordnung nach Anspruch 1, **dadurch gekennzeichnet, dass** das Leitungsnetz (50) mindestens eine Wärmezuführleitung (54) zum Einbringen von Wärmeenergie in die Wärmespeicherschicht (20) und mindestens eine Wärmeabführleitung (52) zum Abführen von in der Wärmespeicherschicht (20) gespeicherter Wärmeenergie an einen Wärmeverbraucher wie etwa eine Raumheizung aufweist.

3. Bodenplattenanordnung nach Anspruch 1 oder 2, **dadurch gekennzeichnet, dass** die Wärmezuführleitung (54) für ein flüssiges Wärmeträgermedium wie etwa Wasser und die Wärmeabführleitung (52) für ein gasförmiges Wärmeträgermedium wie etwa Luft eingerichtet ist, wobei der Wärmeverbraucher bevorzugt ein Luftheizsystem wie etwa eine Lüftungsanlage aufweist.

4. Bodenplattenanordnung nach einem der vorhergehenden Ansprüche, **dadurch gekennzeichnet, dass** die zweite Dämmungsschicht (40) ein Material mit geringer Wärmeleitfähigkeit wie etwa Mineralwolle, expandiertes Polystyrol, Polyurethan und/oder einen anderen für Anwendung unter Estrichen (45) geeigneten Dämmstoff aufweist.

5. Bodenplattenanordnung nach einem der vorhergehenden Ansprüche, **gekennzeichnet durch** eine oberhalb der zweiten Dämmungsschicht (40) angeordnete Estrichschicht (45).

6. Bodenplattenanordnung nach einem der vorhergehenden Ansprüche, **dadurch gekennzeichnet, dass** die erste Dämmungsschicht (30) einem Bauuntergrund zugewandt ist und die Wärmespeicherschicht (20) eine tragende Fundamentschicht für ein Gebäude ist.

7. Bodenplattenanordnung nach einem der vorhergehenden Ansprüche, **dadurch gekennzeichnet, dass** die erste Dämmungsschicht (30) ein Material mit geringer Wärmeleitfähigkeit wie etwa Glasschotter, Schaumglas und/oder extrudiertes Polystyrol aufweist.

8. Bodenplattenanordnung nach einem der vorhergehenden Ansprüche, **dadurch gekennzeichnet, dass** die erste Dämmungsschicht (30) und/oder die zweite Dämmungsschicht (40) einen Wärmedurchgangskoeffizient von 0,3 W/m²K oder weniger, bevorzugt 0,2 W/m²K oder weniger, insbesondere etwa 0,12 W/m²K oder weniger aufweist.

9. Bodenplattenanordnung nach einem der vorhergehenden Ansprüche, **dadurch gekennzeichnet, dass** die Wärmespeicherschicht (20) ein Material mit einer spezifischen Wärmekapazität von 0,5 kJ/(kg·K) oder mehr, insbesondere 0,85 kJ/(kg·K) oder mehr, und bevorzugt mit einer spezifischen Wärmekapazität von 1,5 kJ/(kg·K) oder weniger, insbesondere 1,0 kJ/(kg·K) oder weniger aufweist.

10. Bodenplattenanordnung nach einem der vorhergehenden Ansprüche, **dadurch gekennzeichnet, dass** die Wärmespeicherschicht (20) Stahlbeton, insbesondere bewehrten Stahlbeton aufweist.

11. Bodenplattenanordnung nach einem der vorhergehenden Ansprüche, **dadurch gekennzeichnet, dass** die Wärmespeicherschicht (20) eine Dicke (D) von 200 mm oder mehr und 1000 mm oder weniger, insbesondere von 300 mm oder mehr und 500 mm oder weniger aufweist.

12. Bodenplattenanordnung nach einem der vorhergehenden Ansprüche, **gekennzeichnet durch** eine Wärmepumpe zum Übertragen von in der Wärmespeicherschicht (20) gespeicherter Wärmeenergie auf das Wärmeträgermedium.

13. Bodenplattenanordnung nach einem der vorhergehenden Ansprüche, **dadurch gekennzeichnet, dass** das zum Einbringen von Wärmeenergie in die Wärmespeicherschicht (20) vorgesehene Wärmeträgermedium zum Aufnehmen der Wärmeenergie durch eines oder mehrere der folgenden Systeme eingerichtet ist: ein Blockheizkraftwerk, einen Kraft-Wärme-Kopplungsaufbau, ein Solarthermie-System, ein Beheizungssystem mittels Strom aus dem Versorgungsnetz oder mittels Strom aus einer Photovoltaikanlage, eine mittels Strom aus dem Versorgungsnetz oder mittels Strom aus einer Photovoltaikanlage betriebene Wärmepumpe, ein Holzheizsystem und/oder ein Kamin.
